Europäisches Patentamt

(19) European Patent Office

Office européen des brevets

(11) Publication number: **0 006 021**
**B1**

(12) **EUROPEAN PATENT SPECIFICATION**

(45) Date of publication of patent specification: **07.10.81**

(51) Int. Cl.³: **B 62 M 9/12**

(21) Application number: **79301029.9**

(22) Date of filing: **01.06.79**

(54) Derailleur.

(30) Priority: **02.06.78 JP 75921/78**
**09.12.78 JP 170080/78**

(43) Date of publication of application:
**12.12.79 Bulletin 79/25**

(45) Publication of the grant of the European patent:
**07.10.81 Bulletin 81/40**

(84) Designated Contracting States:
**BE DE FR GB IT**

(56) References cited:
**US - A - 3 535 950**
**US - A - 3 973 447**
**US - A - 4 038 878**

(73) Proprietor: **SHIMANO INDUSTRIAL COMPANY LIMITED**
**77, 3-cho Oimatsu-cho Sakai-shi**
**Osaka (JP)**

(72) Inventor: **Nagano, Masashi**
**1975-11 Kanaoka-cho Sakai-shi**
**Osaka (JP)**
Inventor: **Isobe, Mitsuhide**
**15-16, 4-cho, Chokoji-Minami Toyonaka-shi**
**Osaka (JP)**

(74) Representative: **Szczuka, Jan Tymoteusz et al,**
**Cruikshank & Fairweather 19 Royal Exchange Square**
**Glasgow G1 3AE Scotland (GB)**

Courier Press, Leamington Spa, England.

Derailleur

This invention relates to a derailleur suitable for use with cycles, and more particularly to a derailleur suitable for use in switching a drive chain between the sprockets of a multi-speed sprocket which derailleur comprises: a four member linkage mechanism comprising a base member, first and second link members pivotally connected to said base member, and a movable member connected to said link members so as to be reciprocably movable relative to the base member and having a chain guide; a return biasing means arranged for providing movement of the movable member in a return direction; and control wire engagement means arranged for providing movement of the movable member in a forward direction when a control wire engaged therewith is pulled against the force of the return biasing means in use of the derailleur.

In known such derailleurs, for example, as disclosed in U.S. Patent Specification No. 3,535,950, gear change is effected in such a manner that pulling of the control wire and the action of the return spring allow the movable member to move with respect to the base member through a parallelogrammic translation of the four member linkage mechanism so that a drive chain guide by the chain guide is moved axially of the multi-speed sprocket to be switched between the sprockets thereof.

In order to change gear by pulling the control wire against the force of the return spring, especially in the case of changing from a smaller diameter sprocket to a larger diameter one, a cyclist will occasionally operate the lever in slow motion or by a shortened control lever-stroke, so that the chain is guided so as to interfere with a sprocket in the course of being switched thereto, which can result in undesirable noise or undue wear between the sprocket and drive chain.

Accordingly, it is desirable that the chain be automatically switched to the correct position of correct engagement with the desired sprocket even in the case of slow operation or a shortened stroke of the control means operating the control wire. However, it has not previously been found possible to do this without the use of very complicated mechanisms.

It is an object of the invention to provide a derailleur which is simple in construction and capable of ensuring the chain's switching to the desired sprocket even when the control wire is not fully correctly operated.

According to the present invention such a derailleur is characterized in that the movable member is freely movable reciprocably within a limited predetermined range relative to the base member without being subjected to the action of said return biasing means in substantially all positions of the linkage mechanism, in use of the derailleur.

Thus the present invention provides that the movable member is subjected to no action of the return spring to be made movable in reciprocation freely in a given range so that when the control wire is pulled for changing the speed the stroke of pull operation, over the given free rotation range, allows the movable member to move forward and then the movable member, at the end of the forward movement of the movable member resulting from operation of the control wire the movable member is further movable forward within its free movement range and when the drive chain has been brought into interfering contact with a sprocket before switching thereto following an incomplete pull-stroke of the control wire, the movable member of the derailleur is moved into a fully switched position on the desired sprocket by means of the tension in the drive chain.

The control wire engagement means and the return biasing means can be arranged in various ways and the range of free movement provided in different ways according to the invention using for example different one of the members of the four-member linkage mechanism. Thus, for example, the control wire engagement means may be provided on the first-link member and the return biasing means biases the first link member with respect to the base member, a limited range of free movement being provided between the end of said first link member connected to the movable member and said movable member corresponding to said limited range of free movement of the movable member relative to the base member. In either case, the movable member is not subjected to the action of the return biasing means within its range of free movement. Where the range of free movement of the movable member is obtained indirectly, for example, via a range of free movement of a link member relative to the base member, it will of course be appreciated that the two ranges of free movement may be different in direction and size.

With a derailleur of the invention, when switching the drive chain, especially from a smaller diameter sprocket to a larger diameter one, can involve movement of the movable member by making use of the tension applied to the drive chain in contact with the sprocket to be meshed even when the control lever is operated slowly or when its operation is discontinued before the chain is fully switched of as to correctly switch the chain into full engagement with the desired sprocket.

As a result, the derailleur of the invention, even with its relatively simple constitution, prevents the chain from being maintained in an interfering contact with the sprocket when the control wire is improperly operated as mentioned above, thereby eliminating the noise caused by such contact of the drive chain with the sprocket.

These and other advantages and novel features of the invention will be more apparent from the following description of some preferred embodiments thereof illustrated with reference to the accompanying drawings, in which:

Fig. 1 is a front elevation of a first embodiment of the derailleur of the invention;

Fig. 2 is a bottom plan view thereof; and

Figs. 3 and 4 are schematic diagrammatic views illustrating operation of the derailleur of Figs. 1 and 2;

Fig. 5 is a schematic diagrammatic view explanatory of a second modified form of the embodiment of Figs. 1 to 4;

Fig. 6 is a front view of a third embodiment of the invention;

Fig. 7 is a bottom view of the derailleur of Fig. 6;

Fig. 8 is an enlarged sectional view of the principal portion of the derailleur of Figs. 6 and 7; and

Figs. 9 to 12 are schematic diagrammatic views illustrating operation of the derailleur of Figs. 6 to 8.

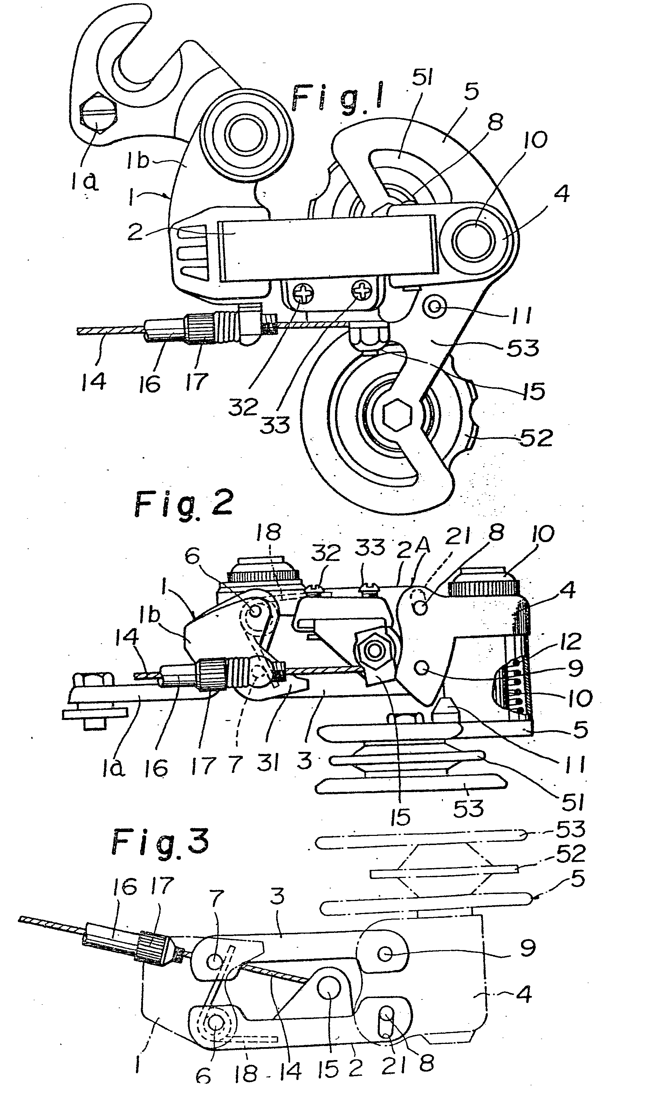

Referring to Figs. 1 to 4 of the drawings, a rear derailleur comprises a four member linkage mechanism $A$ constituted by a base member 1, first and second link members 2 and 3, and a movable member 4 having a chain guide 5.

The base member 1 comprises a bracket $1a$ fixed to the bicycle frame or seat stay and a support $1b$ mounted for rotation within a limited predetermined respect to the bracket $1a$. The first and second link members 2,3 are each pivotally connected at one end thereof to the support $1b$ by means of pins 6 and 7.

The first and second link members 2 and 3 are arranged to be substantially parallel to each other and each is pivotally connected at its other end to the movable member 4 by means of pins 8 and 9 respectively. The two first second link members 2 and 3 swing to allow the movable member 4 to move in parallel relation with respect to the base member 1 between the high speed sprocket position as shown in Fig. 2 and the low speed stage sprocket position (not shown).

The chain guide 5 mounted on the movable member 4 comprises two pulleys 51 and 52 and a supporting change-over frame 53 mounted rotatably on the movable member 4 on a pivot 10. The change-over frame 53 is limited in its rotation by a stop means 11 and is biased towards said stop means 11 by a spring means 12 wound around the pivot 10. The spring means 12 serves to apply tension to a drive chain (not shown) guided by the pulleys 51 and 52 of the chain guide 5.

In the above described derailleur, a control wire 14 is secured to the first link member 2 by means of a holder 15 constituting control wire engagement means mounted thereon, an outer sheath 16 guiding the wire 14 being supported on the base member 1 by a support 17, a return spring 18 being wound around the pin 6 pivotally connecting the first link member 2 to the base member 1, the return spring 18 having one generally radially outwardly extending end abutted against the pin 7 connecting the second link member 3 to the base member 1 and its other end in abutment with the first link member 2 at one side of the base member 1, and the first link member 2 being provided at one end to one side of the movable member 4 with a slot 21 through which the pin 8 pivotally connecting the first link member 2 to the movable member 4 extends, thereby allowing the first link member 2 to move only within a given range with respect to the movable member 4.

The base member 1 is also provided with a stop member 31 disposed to face the movable member 4 and the control wire holder 15 is provided with adjustment screws 32, 33 to permit positional adjustment of the holder 15.

The operation of the above described derailleur is as follows:

Referring to Figs. 2 and 3, the movable member 4 is shown in the high speed sprocket position. The control wire 14 is pulled to allow the first link member 2 only to swing within the range defined by the length of the slot 21. The pull-operation of the control wire 14 within this range, does not result in movement of the movable member 4 but the pivotal movement of the first link member 2 at this stage removes the effects of the biasing force of the return spring 18 from the movable member 4. As a result, the movable member 4 becomes freely movable with respect to the link member 2 within the range defined by the slot 21.

Under these conditions, when the wire 14 is pulled further the end of the slot 21 abuts the connecting pin 8 disposed therein and thereafter the movable member 4 moves forward following the pivotal movement of the link member 2, so that the drive chain guided by the pulleys 51 and 52 moves toward the sprocket to be meshed (not shown) and contacts therewith.

At this stage, if the pull-operation of the control wire 14 is ceased, the drive chain, when switched by a conventional derailleur, would be held in an interference contact with the sprocket and make a noise. On the other hand, with the derailleur of the present invention, the movable member 4 is still freely movable within a limited range, when the chain is held in contact with the sprocket.

Thus, even when operation of the control wire 14 is discontinued, the tension of the drive chain itself acts on the movable member 4 simultaneously with the chain's contact with the sprocket, so that the movable member 4 is allowed to move correspondingly within the range of free movement defined by the slot 21 into a fully engaged position on the desired sprocket.

The slot 21, instead of being provided in the first link member 2, could also be provided in the movable member 4. In addition, it is to be noted that the range of free movement of the second link member provided by the slot 21 is restricted to such an extent that the drive chain continues to ride on the intended sprocket after engagement therewith.

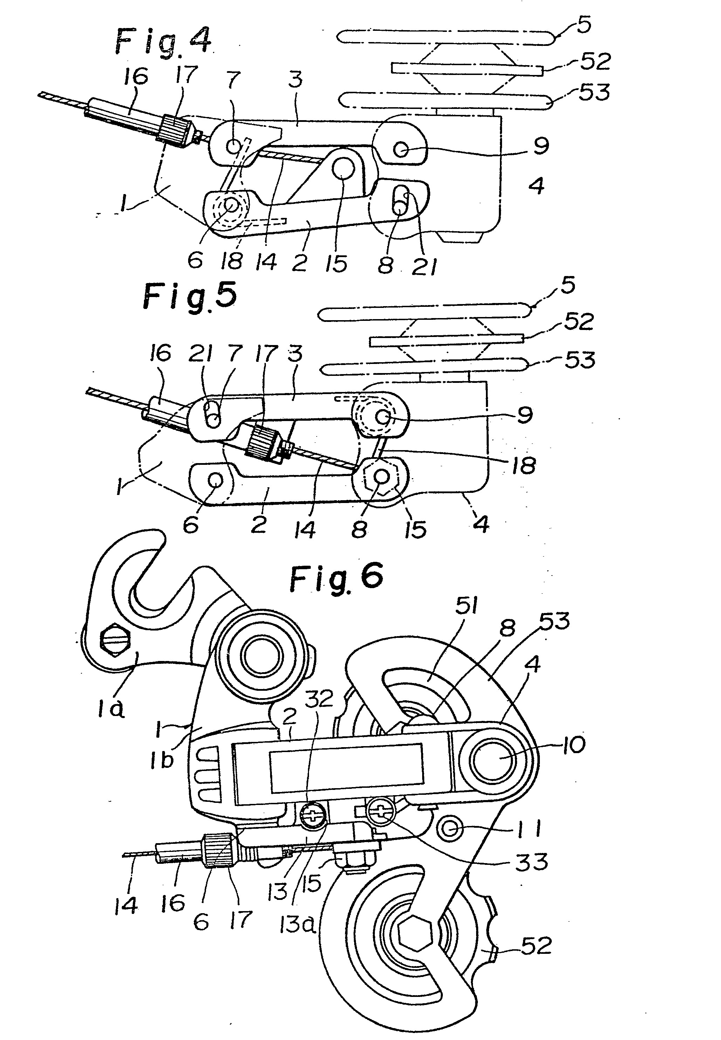

A further embodiment will now be described with reference to Figs. 6 to 12, the same reference numbers being used to indicate parts corresponding to those in Figures 1 to 5.

In the further embodiment the principal difference from the first embodiment is the provision of an arm 13 pivotally mounted on the four member linkage mechanism, through the connecting pin 6 pivotally connecting the first link member 2 to the base member 1 and the control wire engagement 15 are in this case provided on the arm 13. In this embodiment as in the first described embodiment, the control wire is in the form of a Bowden cable and the control wire engagement means formed for engagement of the wire of the cable, further engagement means being provided for engagement of the sheath 16 thereof — in the case of the present embodiment in the form of a support 17 mounted on the base member 1 at one end of the connnecting pin 7 connecting the base member 1 to the second link member 3. Nevertheless various other arrangements are also possible. Apart from forming the control wire engagement means for engagement of the Bowden cable sheath and the further engagement means for engagement of the Bowden cable wire, the positioning of these can also be varied on the derailleur and indeed if desired the further engagement means could be separated entirely therefrom and mounted, for example, on the cycle frame.

The return biasing means in the further embodiment is in the form of a helical spring 18 wound around the connecting pin 6 on which the arm 13 is mounted with one generally radially extending end in abutment with the connecting pin 7 on which the Bowden cable sheath support 17 is mounted and a second generally radially extenting end in abutment with the arm 13 for rotationally biasing the arm relative to the base member 1.

Referring to Figs. 6 through 12, the arm 13 has an engagement projection or tongue *13a* and is pivotally supported by the pin 6 on the base member 1. A gap in the form of a slot *2a* is provided in the first link member 2 and is engaged with the tongue 13a which is freely movable in said slot *2a* within a limited predetermined range with respect to the first link member 2.

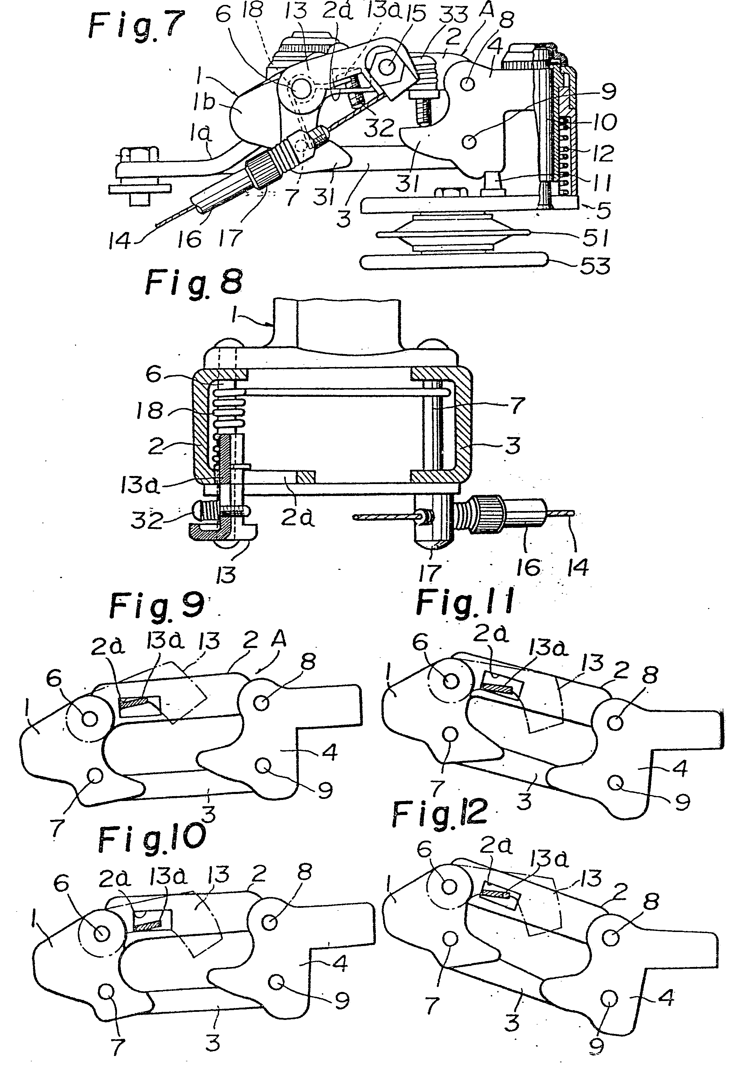

The operation of this embodiment will now be described. Figs. 7 and 9 show the movable member 4 in a high speed sprocket engagement position with the arm 13, as in the case of the first embodiment, allowing the first and second link members 2 and 3 and movable member 4 to be movable freely with respect to the base member 1 through a limited range. When the control wire 14 is operated to pull the arm 13 beyond the limit of its free movement range as defined by the slot 2a, the movable member 4 is moved forward together therewith as shown in Fig. 11.

The drive chain is now guided by the pulleys 51 and 52 to move towards the sprocket intended to be meshed with and contacts it. If at this stage pull-operation of the control wire 14 is discontinued, the first and second link members 2 and 3 and movable member 4 are free to move still further forward with respect to the base member 1 and independently thereof under the influence of the tension in the drive chain to an extent corresponding to the aforesaid range of free relative movement defined by the slot 2a, thereby enabling proper switching of the chain to the desired sprocket to be completed.

The engaging tongue 13a provided on the arm 13 may be formed integrally therewith or mounted thereon by suitable mounting means, such as, for example, a separate pin.

The range of free pivotal movement of the arm 13, could, instead of being defined by the slot 2a as stated above, be defined by suitable stop means provided on the first link member 2 and spaced at a predetermined interval, within which the engaging tongue 13a or other projection means moves; or by two stop means provided respectively on the arm 13 and on the first link member 2 and spaced at a predetermined interval. Furthermore the slot or stop means could be provided in the arm 13 and the link member 2 provided with the projection means. Also the range of free pivotal movement of the arm 13 is not limited to being determined at the link member 2, but could instead be determined at the movable member 4.

Although the above described embodiments are designed primarily for use as rear derailleurs, the invention is of course also applicable to front derailleurs.

## Claims

1. A derailleur suitable for use in switching a drive chain between the sprockets of a multi-speed sprocket, which derailleur comprises: a four member linkage mechanism (A) comprising a base member (1), first and second link members (2,3) pivotally connected to said base member (1), and a movable member (4) connected to said link members (2,3) so as to be reciprocably movable relative to the base member (1) and having a chain guide (5); a return biasing means (18) arranged for providing movement of the movable member (4) in a return direction; and a control wire engagement means (15) arranged for providing movement of the movable member (4) in a forward direction when a control wire (14) engaged therewith is pulled against the force of the return biasing means (18) in use of the derailleur; characterized in that the movable member (4) is freely movable reciprocably within a limited predetermined range relative to the base member (1) without being subjected to the action of said return biasing means (18) in substantially all positions of the linkage mechanism (A) in use of the derailleur.

2. A derailleur as claimed in Claim 1 wherein the control wire engagement means (15) is provided on the first link member (2) and the return biasing means (18) biases the first link member (2) with respect to the base member (1), a limited range of free movement being provided between the end of said first link member (2) connected to the movable member and said movable member (4) corresponding to said limited range of free movement of the movable member (4) relative to the base member (1).

3. A derailleur as claimed in Claim 2, wherein said end of said first link member (2) is pivotally connected to said movable member (4) by a connecting pin (8) extending through a slot (21) in either the first link member (2) or the movable member (4) whereby said first link member is reciprocably movable relative to said movable member (4).

4. A derailleur as claimed in Claim 1, wherein an arm (13) is pivotally connected to the base member (1) of the four member linkage mechanism (A) so that said arm (13) is freely movable relative to the first link member (2) or the movable member (4) within a limited range corresponding to said limited range of free movement of the movable member (4) relative to the base member (1), said control wire engaging means (15) being mounted on said arm (13) and said return biasing means (18) being arranged to act between said arm and said base member.

5. A derailleur as claimed in Claim 4, wherein said arm is provided with an engagement member extending through a slot or aperture (2a) in said first link member (2) in which slot or aperture (2a) the engagement member is freely reciprocably movable within said limited predetermined range.

6. A derailleur as claimed in Claim 1 for use with a control wire (14) in the form of a Bowden cable wherein a further engagement means is provided for engagement of the sheath of the Bowden cable.

7. A derailleur as claimed in Claim 6, wherein one of the engagement means is fixed to the first link member (2) and the other is fixed to the base member (1) or the movable member (4); wherein the return biasing means (18) is disposed to act between the first link member (2) and the base member (1) or the movable member (4) respectively, and wherein the first link member (2) is freely movable within a limited range with respect to the movable member (4) or the base member (1) respectively, corresponding to said limited range of free movement of the movable member (4) relative to the base member (1).

8. A derailleur as claimed in Claim 6, wherein one of the engagement means is fixed to one of the members of the four member linkage mechanism (A) and the other engagement means is fixed to an arm (13) pivotally connected to said one of the members; wherein the return biasing means (18) is disposed for acting between said one of the members and the arm (13), and wherein the arm (13) is freely movable with respect to another member of the four member linkage mechanism (A) within a limited range corresponding to said limited range of free movement of the movable member (4) relative to the base member (1).

## Patentansprüche

1. Kettenschaltung zum Umschalten einer Antriebskette zwischen den Kettenrädern eines Mehrgangkettenrades, bestehend aus: einem viergliedrigen Schwingenmechanismus (A), der aus einem Unterteil (1), damit gelenkig verbundenen ersten und zweiten Schwingengliedern (2, 3) und einem beweglichen Glied (4) aufgebaut ist, das gegenüber dem Unterteil (1) hin und her beweglich mit den besagten Schwingengliedern (2, 3) verbunden ist und eine Kettenführung (5) aufweist, einer Rückstellvorspannvorrichtung (18), um eine Bewegung des beweglichen Glieds (4) in der Rückstellrichtung zu ermöglichen, und Eingriffsmitteln (15) für das Betätigungskabel, um eine Bewegung des beweglichen Glieds (4) in der Vorwärtsrichtung zu ermöglichen, wenn im Gebrauch der Kettenschaltung ein damit in Eingriff stehendes Betätigungskabel (14) entgegen der Kraft der Rückstellvorspannvorrichtung (18) gezogen wird; dadurch gekennzeichnet, dass das bewegliche Glied (4) in im wesentlichen allen im Gebrauch der Kettenschaltung vorkommenden Stellungen des Schwingenmechanismus (A) gegenüber dem Unterteil (1) innerhalb eines begrenzten, vorgegebenen Bereichs frei hin und her beweglich ist, ohne dabei der Wirkung der besagten Rückstellvorspannvorrichtung (18) zu unterliegen.

2. Kettenschaltung nach Anspruch 1, dadurch gekennzeichnet, dass die Eingriffsmittel (15) für das Betätigungskabel auf dem ersten Schwingenglied (2) angeordnet sind und die Rückstellvorspannvorrichtung (18) das erste Schwingenglied (2) gegenüber dem Unterteil (1) vorspannt, wobei ein begrenzter Bereich freier Bewegung zwischen dem Ende des besagten, mit dem beweglichen Glied verbundenen ersten Schwingenglieds (2) und diesem beweglichen Glied (4) vorgesehen ist, der jenem begrenzten Bereich freier Bewegung des beweglichen Glieds (4) gegenüber dem Unterteil (1) entspricht.

3. Kettenschaltung nach Anspruch 2, dadurch gekennzeichnet, dass das besagte Ende jenes ersten Schwingenglieds (2) mittels eines einen Schlitz (21) in entweder dem ersten Schwingenglied (2) oder dem beweglichen Glied (4) durchsetzenden Verbindungszapfens (8) gelenkig mit diesem beweglichen Glied (4) verbunden ist, sodass das besagte erste Schwingenglied gegenüber jenem beweglichen Glied (4) hin und her beweglich ist.

4. Kettenschaltung nach Anspruch 1, dadurch gekennziechnet, dass ein Schenkel (13) gelenkig mit dem Unterteil (1) des viergliedrigen Schwingenmechanismus (A) verbunden ist, sodass dieser Schenkel (13) gegenüber dem ersten Schwingenglied (2) oder dem beweglichen Glied (4) innerhalb eines begrenzten Bereichs frei beweglich ist, der jenem begrenzten Bereich freier Bewegung des beweglichen Glieds (4) gegenüber dem Unterteil (1) entspricht, wobei die Eingriffsmittel (15) für das Betätigungskabel auf diesem Schenkel (13) angebracht sind und die besagte Rückstellvor-Schwingenglied (2) durchsetzt und in diesem sie zwischen dem Schenkel und diesem Unterteil wirkt.

5. Kettenschaltung nach Anspruch 4, dadurch gekennzeichnet, dass dieser Schenkel mit einem Eingriffsglied versehen ist, das einen Schlitz oder eine Oeffnung (2a) in jenem ersten Schwingenglied (2) durchsetzt und in diesem Schlitz oder dieser Oeffnung (2a) innerhalb des besagten begrenzten vorgegebenen Bereichs frei hin und her beweglich ist.

6. Kettenschaltung nach Anspruch 1 zur Verwendung mit einem Betätigungskabel (14) in Form eines Bowdenzugs, dadurch gekennzeichnet, dass weitere Eingriffsmittel zum Eingriff mit dem Mantel des Bowdenzugs vorgesehen sind.

7. Kettenschaltung nach Anspruch 6, dadurch gekennzeichnet, dass das eine Eingriffsmittel am ersten Schwingenglied (2) und das andere am Unterteil (1) oder dem beweglichen Glied (4) befestigt ist, dass die Rückstellvorspannvorrichtung (18) so angeordnet ist, dass sie zwischen dem ersten Schwingenglied (2) und dem Unterteil (1) bzw. beweglichen Glied (4) wirkt, und dass das erste Schwingenglied (2) gegenüber dem beweglichen Glied (4) bzw. dem Unterteil (1) innerhalb eines begrenzten Bereichts frei beweglich ist, der dem besagten begrenzten Bereich freier Bewegung des beweglichen Glieds (4) gegenüber dem Unterteil (1) entspricht.

8. Kettenschaltung nach Anspruch 6, dadurch gekennzeichnet, dass das eine Eingriffsmittel an einem der Glieder des viergliedrigen Schwingenmechanismus (A) und das andere Eingriffsmittel an einem gelenkig mit dem besagten einen Glied verbundenen Schenkel (13) befestigt ist, dass die Rückstellvorspannvorrichtung (18) so angeordnet ist, dass sie zwischen diesem einen der Glieder und dem Schenkel (13) wirkt, und dass der Schenkel (13) gegenüber einem anderen Glied des viergliedrigen Schwingenmechanismus (A) innerhalb eines begrenzten Bereichts frei beweglich ist, der jenem begrenzten Bereich freier Bewegung des beweglichen Glieds (4) gegenüber dem Unterteil (1) entspricht.

## Revendications

1. Dérailleur convenant à l'utilisation pour le transfert d'une chaîne d'entraînement entre les pignons d'un agencement à plusieurs pignons de changement de vitesse, lequel dérailleur comprend:— un mécanisme de transmission (A) à quatre éléments qui sont une base (1), une première et une deuxiéme biellettes (2,3) reliées de façon pivotante à la base (1), et une pièce mobile (4) reliée aux biellettes (2,3) de façon à pouvoir se déplacer suivant un mouvement réciproque par rapport à la base (1) et comportant un étrier guide-chaîne (5); — des moyens de rappel (18) conçus pour assurer le mouvement de la pièce mobile (4) dans une direction de retour; — et des moyens d'accouplement (15) à câble de commande, conçus pour provoquer le mouvement de l'élément mobile (4) vers l'avant lorsqu'on effectue une traction sur un câble de commande (14) en prise avec ces moyens, en antagonisme avec la force exercée par les moyens de rappel (18) pendant l'utilisation du dérailleur, lequel dérailleur est caractérisé en ce que la pièce mobile (4) peut se déplacer librement dans les deux directions à l'intérieur de limites prédéterminées, par rapport à la base (1), sans être soumise à l'action des moyens de rappel (18) sensiblement dans toutes les positions du mécanisme de transmission (A) pendant le fonctionnement du dérailleur.

2. Dérailleur selon la Revendication 1, caractérisé en ce que les moyens d'accouplement (15) à câble de commande sont prévus sur la première biellette (2) et en ce que les moyens de rappel (18) tendent à rappeler la première biellette (2) par rapport à la base (1), une marge limitée de mouvement libre étant prévue entre l'extrémité de la première biellette (2) reliée à la pièce mobile et ladite pièce mobile (4), correspondant à la marge limitée de mouvement libre de la pièce mobile (4) par rapport à la base (1).

3. Dérailleur selon la Revendication 2, caractérisé en ce que ladite extrémité de la première biellette (2) est reliée de façon pivotante à la pièce mobile (4) par un axe (8) qui traverse une fente (21) ménagée soit dans la première biellette (2) soits dans la pièce mobile (4), de façon à ce que la première biellette puisse se déplacer dans les deux directions par rapport à la pièce mobile (4).

4. Dérailleur selon la Revendication 1, caractérisé en ce qu'un bras (13) est relié de façon pivotante à la base (1) du mécanisme de transmission (A) à quatre éléments, de façon à ce que ce bras (13) puisse se déplacer librement par rapport à la première biellette (2) ou à la pièce mobile (4) à l'intérieur d'une distance limitée correspondant à ladite marge limitée de mouvement libre de la pièce mobile (4) par rapport à la base (1), les moyens d'accouplement (15) à câble de commande étant montée sur le bras (13) et les moyens de rappel (18) étant disposés pour agir entre le bras et la base.

5. Dérailleur selon la Revendication 4, caractérisé en ce que le bras comporte un élément d'engrènement (13a) qui traverse une fente ou ouverture (2a) ménagée dans la première biellette (2), l'élément d'engrènement pouvant se déplacer librement dans les deux directions dans cette fente ou ouverture (2a), à l'intérieur de la distance limitée prédéterminée.

6. Dérailleur selon la Revendication 1, utilisable avec un câble de commande (14) constitué par un câble de type Bowden, caractérisé en ce que d'autres moyens d'accouplement sont prévus pour le raccordement de la gaine du câble de type Bowden.

7. Dérailleur selon la Revendication 6, caractérisé en ce que les premiers moyens d'accouplement sont fixés sur la première biellette (2) et les autres moyens d'accouplement sont fixés sur la base (1) ou la pièce mobile (4), en ce que les moyens de rappel (18) sont disposés de manière à agir entre la première biellette (2) et la base (1) ou la pièce mobile (4) respectivement, et en ce que la première biellette (2) peut se déplacer librement à l'intérieur d'une distance limitée, par rapport à la pièce mobile (4) ou à la base (1) respectivement, correspondant à ladite marge limitée de mouvement libre de la pièce mobile (4) par rapport à la base (1).

8. Dérailleur selon la Revendication 6, caractérisé en ce que des moyens d'accouplement sont fixés à l'un des éléments du mécanisme de transmission (A) à quatre éléments, et les autres moyens d'accouplement sont fixés à un bras (13) relié de façon pivotante à l'un desdits éléments, en ce que les moyens de rappel (18) sont disposés de manière à agir entre ce même élément et le bras (13), et en ce que le bras (13) peut se déplacer librement par rapport à un autre élément du mécanisme de transmission (A) à quatre éléments, à l'intérieur d'une distance limitée correspondant à ladite marge limitée de mouvement libre de la pièce mobile (4) par rapport à la base (1).

0 006 021

Fig.1

Fig.2

Fig.3

Fig.4

Fig.5

Fig. 6

Fig. 7

Fig. 8

Fig. 9

Fig. 10

Fig. 11

Fig. 12